# EUROPEAN PATENT SPECIFICATION

(11) **EP 2 070 840 B1**
(45) Date of publication and mention of the grant of the patent: **10.04.2013**
(21) Application number: 09003288.9
(22) Date of filing: 01.10.2004
(51) Int. Cl.: B65D 83/04

(54) **Container with pill dispensing insert**
Behälter mit Tablettenausgabeeinsatz
Conteneur avec insert de distribution de médicaments

(30) Priority: 02.10.2003 US 508183 P; 14.10.2003 US 510888 P
(43) Date of publication of application: 17.06.2009
(62) Divisional of application: 04785343.7
(73) Proprietor: Capitol Plastic Products, LLC, Amsterdam, New York 12010 (US)
(72) Inventor: Belfance, John, Fonda, NY 12068 (US); Giraud, Jean Pierre, 75012 Paris (FR)
(74) Representative: Stevens, Ian Edward

(56) References cited:
- GB-A- 2 345 898
- US-A- 3 182 694
- US-A- 5 911 937
- US-B1- 6 174 952

## Description

### CROSS-REFERENCE TO RELATED APPLICATIONS

This application claims priority to U.S. provisional application serial no. 60/508,183, entitled *"Container with Pill Dispensing Insert' by* Jean-Pierre Giraud and John Belfance, filed October 2, 2003 and to U.S. provisional application serial no. 60/510,888, entitled *"One Piece Pill Dispenser Containing an Insert and Method Thereof'* by Jean-Pierre Giraud, filed October 14, 2003.

The present invention relates to container systems with dispensing inserts.

### BACKGROUND OF THE INVENTION

Typically when opening a pill container, the pills can spill out of the container. This allows moisture and other contaminants to enter the container. Additionally, one can easily lose some of the pills. There is a need for improved containers for pills that administer only one pill at a time.

Therefore it is an object of the invention to provide an improved container for medicines that prevents the pills from spilling out of the container when it is opened.

Containers of this kind are known from US-A-3 182 694 6B-A-2 345 898.

### BRIEF SUMMARY OF THE INVENTION

Container assemblies for storing and delivering pills, tablets, capsules, candy or other shaped objects are disclosed herein. The container assembly includes a container, a cap and a dispensing insert. The container and cap may be formed as one piece connected by a hinge. The insert may be formed separately or as a part of the container. A process for making a molded container which includes an integral dispensing isnert and cap is described. The dispensing insert is designed to dispense one pill, tablet or other shaped object at a time. When in the closed position, the container assembly can be inverted and shaken to release one pill or tablet from the container, through the dispensing insert, which remains in the area between the cap and top of the container until removed by the patient. The container assembly may be tamper-proof and/or childproof.

### BRIEF DESCRIPTION OF THE DRAWINGS

Figures 1A-1B are side views of one embodiment of the container assembly showing the container and the integrally attached cap. Figure 1A is a prospective side view of the container and the closed cap showing the hinged side of the cap. Figure 1B is a prospective side view of the container and the closed cap showing the tabbed side of the cap.
Figures 2A-2B are overhead views of the integrally attached cap in a closed (Figure 2A) and in an open position with the dispensing insert placed within the upper portion of the container (Figure 2B).
Figures 4A-4B are cross-sectional side views of the container with closed cap (Figure 4A) and open cap (Figure 4B), showing a petal like insert and desiccant lining in the container.
Figures 5A-5B are perspective views of the closed cap (Figure 5A) and petal like insert (Figure 5B) of the container of Figures 4A-4B.
Figures 6A-6B are perspective views of the mold and container with integral insert and cap.

### DETAILED DESCRIPTION OF THE INVENTION

### I. Definitions

As generally used herein, "empty stage" refers to a stage when the container is empty prior to filling, such as when the container is shipped by the manufacturer of the container to the site where items are placed inside the container.

As generally used herein, "filling stage" refers to a stage after the container has been filled with its content.

As generally used herein, "tamper-proof seal" means a visual indication that: (a) when not broken, the container's cap has not been opened; and (b) when broken, the container cap has been opened and thus, visually displays that the container was tampered with.

### II. Container, Cap and Dispensing Insert Assembly

The container may have any shape that is suitable for storing pills, tables or other shaped objects. In the preferred embodiment, the container is in the shape of a cylinder. Typically, the container is closed at one end and is open at the opposite end. Optionally, when the container is closed, the container is moisture tight

The cap is typically attached to the container by way of a hinge. The cap also has a mating sealing element that interfaces with the open end of the container, thereby forming a container and cap assembly.

The assembly is preferably molded of plastic. Suitable material for assembly includes plastics like thermoplastics such as polypropylene and polyethylene. The cap 30 and the container 10 may be integrally molded of plastic to form a hinge 34 there between. In another embodiment, the cap 30 and the container 10 may be produced in a conventional molding process. The assembly may be produced in accordance with the operation disclosed in U.S. Patent Nos. 4,783,056 to Abrams, RE37,676 to Abrams et al. or 6,303,064 to Abrams et al. The disclosures of these patents are incorporated herein by reference.

### 1. Container

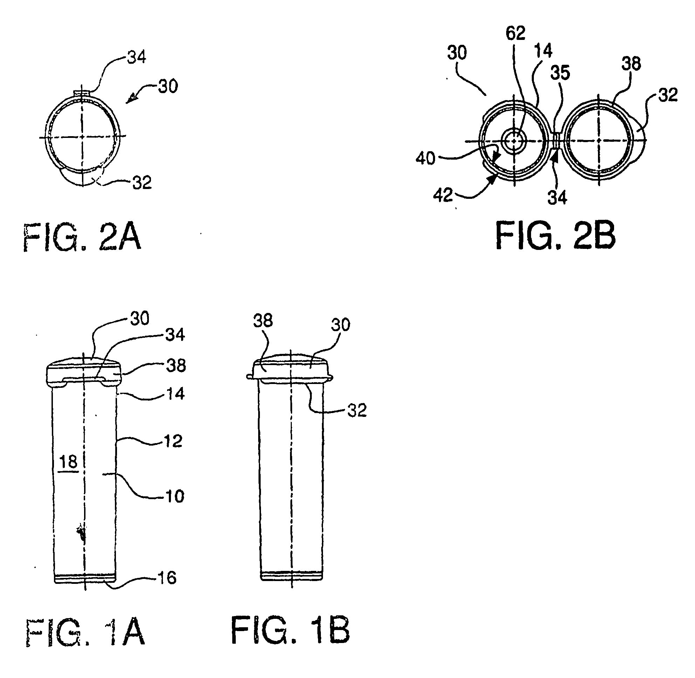

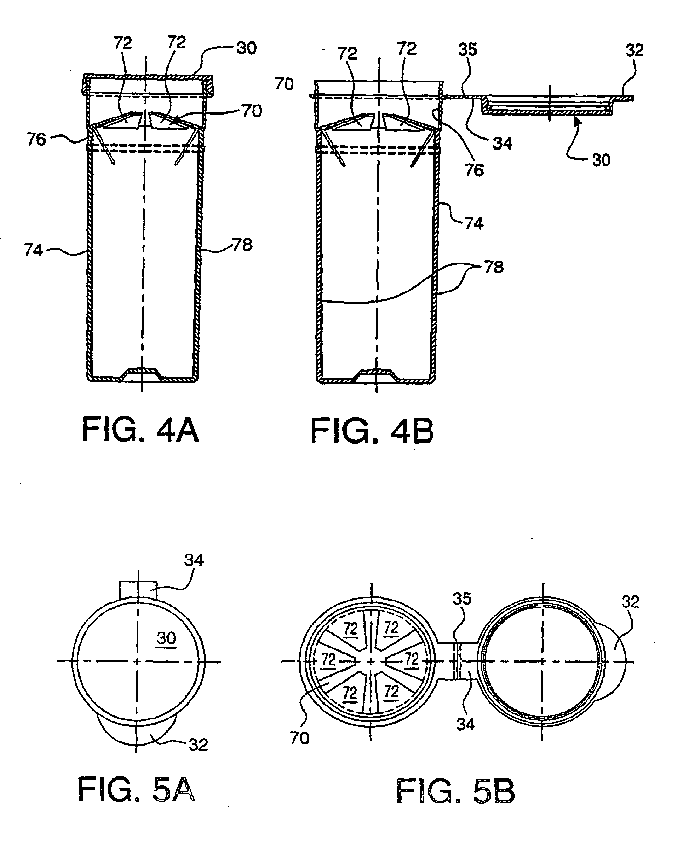

The container assembly is depicted in Figures 1A-1B, and 4A-4B. The cap and insert assembly is shown in Figures 2A and 2B. As depicted in these figures, the assembly includes a container 10 having a base 16, an internal cavity 18, an outer surface 12, and an upper portion 14. The container 10 has a rim 20 at the top of the upper portion 14. The container 10 also has a partial flange 14 extending radially outwardly from the outer surface 12 of the container 10.

The container may be of a sufficient size to store for example, 10 to 200 pills, tablets or other shaped objects, preferably less than 150, more preferably less than 100 or less than 50. The pills or objects typically range in size from about 2 mm to about 20 mm in diameter, preferably from about 4 mm to about 9 mm in size. The size of the pills, tablets or other shaped objects is approximately equivalent to the size of the hole in the dispensing insert. Although depicted as a cylindrical container, it is understood that the container could be made in a variety of container assembly designs, including but not limited to designs having non-cylindrical container assembly shapes.

Optionally, the container includes a lining of a material that absorbs or releases materials, as discussed below with respect to Figures 4A and 4B. As an example, if the material absorbs water vapor, it may be included to keep the contents at a low relative humidity since any moisture that permeates through the seal or is present in the container would be absorbed. The lining material may be a desiccant entrained plastic. Suitable desiccant plastics include, but are not limited to those disclosed in U.S. Patent Nos. 5,911,937; 6,214,255; 6,130,263; 6,080,350; 6,174,952; 6,124,006; 6,221,446; and 6,486,231, all to Hekal. The disclosures of these patents are incorporated herein by reference. By varying the desiccant loading and channeling agent in the plastic formulation, the overall moisture capacity and uptake rate of the desiccant entrained plastic can be controlled. The plastic may be entrained with other absorbing, releasing or activation components. The lining may release a gas, such as an inert gas that prevents oxidation of the enclosed medicament, a flavoring or fragrance, or moisture, in the case of a medicament that should not be allowed to dry out. U.S. Patent Nos. 6,174,952,6,177,1836,194,079,6,316,520,6,124,006,6,221,446, and 6,486,231 describe these kinds of arrangements and are incorporated herein by reference.

In one embodiment, the desiccant entrained plastic is located in a desiccant sleeve, which surrounds at least a portion of the product within the container. In yet another embodiment, the sleeve surrounds the container assembly interior with a thin-walled plastic so that the product contained within the container assembly is completely surrounded by the desiccant entrained plastic sleeve. The items contained in the container may be exposed to about fifty times less moisture when compared to a conventional stoppered container.

### 2. Cap

As shown in Figures 1 through 5, the assembly includes a cap 30 which has a solid base 36 and a tubular skirt 38 extending perpendicularly and outwardly around the outer periphery of the base 36. The cap 30 is typically attached to the container 10 by a hinge 34. The cap 30 has a tab 32 for facilitating the opening and closing of the container 10 at the end opposite the hinge 34. The tab 32 extends perpendicularly and outwardly from the skirt of the cap 38. The container 10 also has a partial flange 14 extending radially outwardly from the outer surface 12 of the container 10 and ending where a thumb tab 32 of cap 30 comes in contact with container 10. The hinge 34 has a recess 35 that functions as a binding point for ease of opening and closing of the container 10. Optionally, the hinge 34 is attached to the container at or near the container flange 14.

The base 36 of the cap 30 has an inner surface 40 and an outer surface 42. In one embodiment, an inner collar 62 is joined to the inner surface 40 of the base 36 of the cap 30. As discussed below, this can be used to seal the dispenser insert opening. Thus, the collar may be sized to fit into and about the edges of the central opening of the insert (70).

While the figures depict the hinge 34 as integral with the cap 30 and container 10, the skilled artisan will readily appreciate that any kind of hinge may be employed, or that a hinge may not be required. In one embodiment, the hinge is formed from a plurality of components. For example, a hinge component attached to the cap may be engaged with a hinge component attached to the container. In another embodiment, the container and cap are joined together by a hinge. In this embodiment, the container assembly is an interconnected assembly in which the cap is opened and closed in a "flip-top" arrangement. Alternatively, the hinge is integral with the cap and container, which provides a one-piece container assembly.

The container assembly may contain an "easy-to-close" cap design, in which the container assembly is specifically designed to be in one of only two states: (1) open or (2) completely closed. The closure arrangement is designed so that the cap cannot be partially closed or cross-threaded. If the cap does not seal properly, it will pop up to the open position.

Optionally, the cap is designed so it can be closed with one hand. Thus, the user should be able to close the cap from any position with respect to the hinge (front, side or back of container assembly). U.S. Patent No. 6,769,558 to Bucholtz describes this arrangement and is incorporated herein by reference.

In yet another embodiment, the container assembly maintains seal performance after repeated lid openings and closings. For example, the seal maintains a low ingression rate after repeated lid openings/closings. In one specific example, the seal maintains its low moisture ingress performance after 50 cycles of lid openings and closings. U.S. Patent Nos. 4,812,116; 4,807,425; 5,723,085; and 6,769,558, and European patent document no. EP 625 948 to Capitol Vial Inc., describe examples of embodiments of this sealing arrangement. The disclosures of these patents are incorporated herein by reference.

### 3. Dispensing Insert

In Figures 4A-4B and 5A-B, the insert 70 is configured in the shape of a petal with solid leaves 72. In another embodiment, the profile of the container's inner side wall 74 is designed with a 'step' 76 above the petals to accommodate the opening of the petals during the mold opening cycle. This step76 along the inner side wall 74 is approximately equal to the thickness of the petal leaves 72.

In another embodiment the container assembly with the insert is manufactured in a single molding cycle and made out of one piece (e.g. no assembly in the mold). The advantages of a single molding process includes manufacturing in a completely sterile process, which is preferred for pharmaceutical applications.

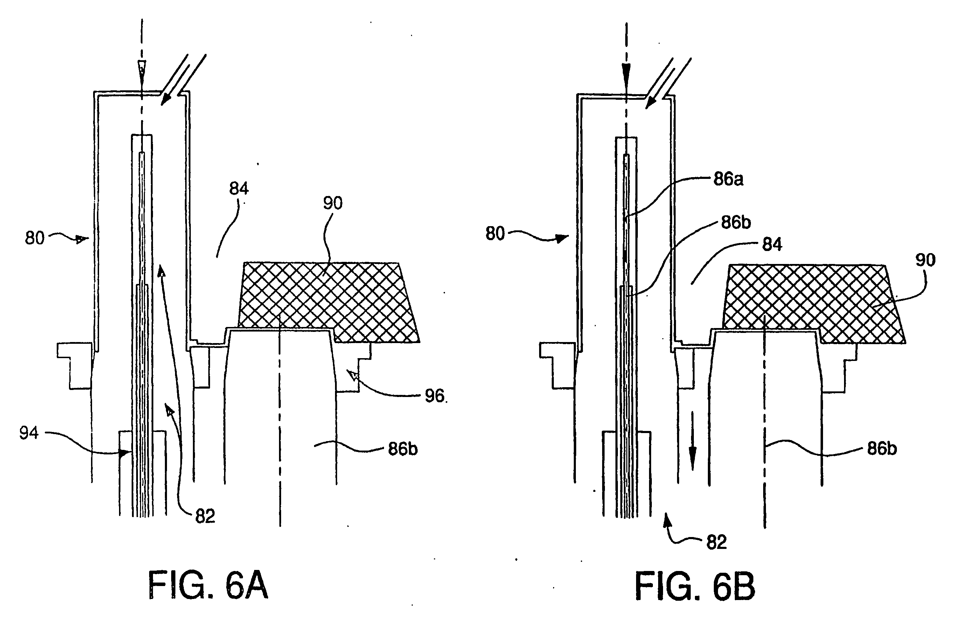

As shown in Figures 6A and 6B, in one embodiment, the mold 80 includes a two-part long core 82 that forms the petal-like insert 70 along the container's inner side walls 74. When the mold 80 is closed, the two-part long core 82 forms the cavity 84 for the insert 70. During the injection cycle, the petal leaves 72 of the insert 70 are filled from the container's side walls 74. After the part is molded, the long core 86 is retracted in a two step process: (1) the cavity 84 that forms the petal opening 78 separates and (2) the long core 86 separates into two pieces 86a and short core 86b and is retracted. When the long core 86 is retracted, the petal leaves 72 are opened into a vertical orientation with respect to the container's side wall 74.

As noted above, the container's inner side wall 74 is designed with a 'step' 76 above the petal leaves 72 to accommodate the opening of the petal leaves 72 during the mold opening cycle. This step 76 along the inner side wall 74 is approximately equal to the thickness of the petal leaves 72. The opened insert 70 permits the long core 86 to exit through the insert 70 without damaging the petal leaves 72. Once the mold 80 is fully retracted, the petal leaves 72 return to the normal position, perpendicular to the container side walls 74.

In a further embodiment, the mold 80 may also incorporate one or more of the following mold features: (1) a short core with an active flipper 90 to close the cap in the mold; (2) the injection point 92 at the bottom of the container; (3) a stripper plate 96; and/or (4) a mold design to accommodate an in-mold liner 98 of desiccant entrained plastic along the inner walls. The container with dessicant lining 78 is shown in Figures 4A and 4B.

### 5. Child Safety and/or Tamper Proof Features

In yet another embodiment, a child resistance feature may be incorporated into the container assembly. An example of such an arrangement is disclosed in pending U.S. patent application no. 09/641,203, filed October 3, 2000, which is incorporated herein by reference.

A tamper evidence feature that is molded into the container assembly may be employed. Shrink-wrap may be used to cover the cap and all or a portion of the container. Alternatively, a two-position, breakaway tab may be used. An example of the two-position, breakaway tab is disclosed in U.S. Patent No. 6,398,067 to Belfance and Supranowicz, the disclosures of which are incorporated herein by reference. The tab is engaged during container assembly filling, and the tab is ejected from the container assembly when first opened by the user. Evidence of tampering with the container is apparent from the broken tab. It will be appreciated that it may not be possible to replace the tab once it has broken, since the tab is formed integrally with the container. Therefore, it should not be possible to defeat the tamper-proof capabilities. It will also be appreciated that the interlocked tab may also aid in preventing dislodgement of the cap during transport.

The cap 30 has a base 36 with a skirt 38 extending perpendicularly and outwardly around the outer periphery of the base 36, and the cap 30 has a hinge 34 and a tab 32 extending perpendicularly and outwardly from the skirt 38 of the cap, as described above with reference to Figures 1 and 2. In this embodiment, the cap can include a first slot and a second slot (not shown) including an interlocking device for engaging with a protrusion on the container 10 (not shown). When the container is in an empty state, the protrusion is positioned within the first slot, and when the container is in a filled stage, the cap is placed upon the container and the protrusion is repositioned within the second slot causing the contact element of the protrusion to engage the interlocking device of the second slot and thus to form a tamper-proof seal.

In yet another embodiment, the protrusion is formed in such a way that, if the cap is opened (*i.e*. tampered with), the protrusion will break off and thus, evidence of tampering with the container will be evident by the broken protrusion. It will be appreciated that it may not be possible to replace the protrusion once it has broken, since the protrusion is formed integrally with the container. Therefore, it should not be possible to defeat the tamper-proof capabilities by replacing the original broken protrusion. It will also be appreciated that the interlocked protrusion not only provides tamper-proof function, but also may aid in preventing dislodgement of the cap during transport.

In another embodiment, a tamper evidence feature is molded into the container assembly. An example is achieved with a two-position, breakaway tab that is disclosed in U.S. Patent No. 6,398,067, incorporated herein by reference. The tab is engaged during container assembly filling, and the tab is ejected from the container assembly when first opened by the user.

### II. Method of using Container Assembly

The container assembly can store a number of pills, tablets or other shaped objects, including items that require storage in a moisture-free environment. For example, stored objects may be candy, pharmaceutical products, and/or vitamins. The tables may be effervescent tablets.

When in the closed position, the container assembly can be inverted and shaken to release one pill or tablet from the container, through the dispensing insert. The pill or tablet will remain in the area between the cap and top of the container.

## Claims

1. A container assembly comprising a container (10) containing tablets, pills or capsules a cap (30) and a dispensing insert (70), wherein the insert (70) is for dispensing a single tablet, pill, or capsule, is inserted into an open end of the container (10), has an upper portion and a lower portion and comprises
a central opening extending from the upper portion to the lower portion of the insert (70)
multiple abutting leaves (72) attached at their base to the outer periphery of the insert (70) and extending towards the center of the insert (70), wherein the leaves (72) are truncated to form an opening in the center of the insert (70), **characterised in that** the diameter of the central opening is sized such that, when in the closed position, the container assembly can be inverted and shaken to release one tablet, pill or capsule from the container (10) through the insert (70) such that the tablet, pill or capsule remains in the area between the cap (30) and the top of the container (10).

2. The container assembly of Claim 1 wherein the leaves (72) are substantially the same size and shape.

3. The container assembly of Claim 1 wherein the insert (70) is extrusion molded of a thermoplastic or thermoset polymer.

4. The container assembly of Claim 1 wherein the insert (70) comprises an upper and a lower portion wherein the outer diameter of the upper portion of the insert (70) is larger than the inner diameter of the container (10) and the diameter of the lower portion of the insert (70) is smaller than the inner diameter of the container (10) so that the insert (70) can be inserted into the container (70).

5. The container assembly according to Claim 1, wherein the cap (30) is attached to the upper portion (14) of the container (10) so that it closes onto the upper portion (14) of the insert (70), such as by a hinge (34).

6. The container assembly of Claim 1 or Claim 5 wherein the cap (30) comprises a collar sized to fit into and abut the edges of the central opening of the insert (70), and/or a tab (32) for easy opening.

7. The container assembly of Claim 5 wherein the cap (30) and container (10) comprise a child resistant or tamper proof fastener.

8. The container assembly of Claim 1 or 5 further comprising a flange (14) around the outer surface (12) of the upper portion (14) of the container (10), which abuts the lower edge of the cap (30) when closed onto the container.

9. The container assembly of Claim 1 or 5 wherein the insert (70) is integral with the container (10).

10. The container assembly of Claims 1 or 5 further comprising an absorbent or an insert releasing gas, preferably an absorbent in the form of a desiccating liner (78).

11. The container assembly of Claim 1 wherein the container (10) is extrusion molded of a thermoplastic or thermoset polymer.

12. A method for storing pills, tablets or capsules comprising placing them In the container (10) of the container assembly of any one of Claims 1 to 11 and closing the cap (30).

## Patentansprüche

1. Behälteranordnung mit einem Behälter (10), der Tabletten, Pillen oder Kapseln enthält, einer Kappe (30) und einem Ausgabeeinsatz (70), wobei der Einsatz (70) zum Ausgeben einer einzelnen Tablette, Pille oder Kapsel dient, in ein offenes Ende des Behälters (10) eingesetzt ist, einen oberen Abschnitt und einen unteren Abschnitt aufweist und umfasst:
eine zentrale Öffnung, die sich von dem oberen Abschnitt zu dem unteren Abschnitt des Einsatzes (70) erstreckt,
mehrere aneinanderstoßende Flügel (72), die an ihrer Basis an dem äußeren Umfang des Einsatzes (70) befestigt sind und sich zu der Mitte des Einsatzes (70) hin erstrecken, wobei die Flügel (72) abgeschnitten sind, um eine Öffnung in der Mitte des Einsatzes (70) zu bilden, **dadurch gekennzeichnet, dass** der Durchmesser der zentralen Öffnung derart dimensioniert ist, dass, wenn die Behälteranordnung sich in der geschlossenen Position befindet, dieselbe umgedreht und geschüttelt werden kann, um eine Tablette, Pille oder Kapsel aus dem Behälter (10) durch den Einsatz (70) derart freizusetzen, dass die Tablette, Pille oder Kapsel in dem Bereich zwischen der Kappe (30) und dem oberen Ende des Behälters (10) verbleibt.

2. Behälteranordnung gemäß Anspruch 1, bei der die Flügel (72) im Wesentlichen von der gleichen Größe und Form sind.

3. Behälteranordnung gemäß Anspruch 1, bei der der Einsatz (70) aus einem thermoplastischen oder wärmehärtbaren Polymer stranggepresst ist.

4. Behälteranordnung gemäß Anspruch 1, bei der der Einsatz (70) einen oberen und einen unteren Abschnitt umfasst, wobei der äußere Durchmesser des oberen Abschnitts des Einsatzes (70) größer als der innere Durchmesser des Behälters (10) ist und der Durchmesser des unteren Abschnitts des Einsatzes (70) kleiner als der innere Durchmesser des Behälters (10) ist, so dass der Einsatz (70) in den Behälter (10) insertiert werden kann.

5. Behälteranordnung gemäß Anspruch 1, bei der die Kappe (30) an dem oberen Abschnitt (14) des Behälters (10) so befestigt ist, dass sie auf dem oberen Abschnitt (14) des Einsatzes (70) schließen kann, wie beispielsweise durch ein Gelenk (34).

6. Behälteranordnung gemäß Anspruch 1 oder Anspruch 5, bei der die Kappe (30) einen Kragen, der so dimensioniert ist, um in die zentrale Öffnung des Einsatzes (70) zu passen und an die Ränder derselben zu stoßen, und/oder eine Lasche (32) zum leichten Öffnenumfasst.

7. Behälteranordnung gemäß Anspruch 5, bei der die Kappe (30) und der Behälter (10) einen kindersicheren oder manipulationssicheren Verschluss umfassen.

8. Behälteranordnung gemäß Anspruch 1 oder 5, ferner mit einem Flansch (14) um die äußere Oberfläche (12) des oberen Abschnitts (14) des Behälters (10), der an den unteren Rand der Kappe (30) stößt, wenn diese auf dem Behälter schließt.

9. Behälteranordnung gemäß Anspruch 1 oder 5, bei der der Einsatz (70) mit dem Behälter (10) einstückig ist.

10. Behälteranordnung gemäß Anspruch 1 oder 5, mit einem Absorptionsmittel oder einem Gas freisetzenden Einsatz, vorzugsweise einem Absorptionsmittel in der Form einer wasserentziehenden Auskleidung (78).

11. Behälteranordnung gemäß Anspruch 1, bei der der Behälter (10) aus einem thermoplastischen oder wärmehärtbaren Polymer stranggepresst ist.

12. Verfahren zum Speichern von Pillen, Tabletten oder Kapseln, das die folgenden Schritte umfasst: Plazieren derselben in dem Behälter (10) der Behälteranordnung gemäß einem der Ansprüche 1 bis 11 und Schließen der Kappe (30).

## Revendications

1. Ensemble de contenant comprenant un contenant (10) contenant des comprimés, pilules ou capsules, un capuchon (30) et un insert de distribution (70), dans lequel l'insert (70) est destiné à distribuer uniquement un comprimé, une pilule ou une capsule, est inséré dans une extrémité ouverte du contenant (10), comporte une portion supérieure et une portion inférieure et comprend
une ouverture centrale s'étendant de la portion supérieure à la portion inférieure de l'insert (70)
de multiples battants de butée (72) fixés à leur base à la périphérie externe de l'insert (70) et s'étendant vers le centre de l'insert (70), dans lequel les battants (72) sont tronqués afin de former une ouverture au centre de l'insert (70), **caractérisé en ce que** le diamètre de l'ouverture centrale est dimensionné de telle sorte que, lorsqu'il est dans la position fermée, l'ensemble de contenant peut être renversé et secoué afin de libérer un comprimé, une pilule ou une capsule du contenant (10) à travers l'insert (70) de sorte que le comprimé, la pilule ou la capsule reste dans la zone entre le capuchon (30) et le dessus du contenant (10).

2. Ensemble de contenant selon la revendication 1, dans lequel les battants (72) sont sensiblement des mêmes taille et forme.

3. Ensemble de contenant selon la revendication 1, dans lequel l'insert (70) est moulé par extrusion d'un polymère thermoplastique ou thermodurcissable.

4. Ensemble de contenant selon la revendication 1, dans lequel l'insert (70) comprend une portion supérieure et une portion inférieure, dans lequel le diamètre externe de la portion supérieure de l'insert (70) est plus grand que le diamètre interne du contenant (10) et le diamètre de la portion inférieure de l'insert (70) est plus petit que le diamètre interne du contenant (10) de sorte que l'insert (70) peut être inséré dans le contenant (70).

5. Ensemble de contenant selon la revendication 1, dans lequel le capuchon (30) est fixé à la portion supérieure (14) du contenant (10) de sorte qu'il se ferme sur la portion supérieure (14) de l' insert (70), tel que par une charnière (34).

6. Ensemble de contenant selon la revendication 1 ou la revendication 5, dans lequel le capuchon (30) comprend un collier dimensionné pour s'ajuster dans les bords de l'ouverture centrale de l'insert (70) et venir en butée contre eux, et/ou une languette (32) pour une ouverture facile.

7. Ensemble de contenant selon la revendication 5, dans lequel le capuchon (30) et le contenant (10) comprennent une fixation de sécurité-enfant ou inviolable.

8. Ensemble de contenant selon la revendication 1 ou 5, comprenant en outre une bride (14) autour de la surface externe (12) de la portion supérieure (14) du contenant (10), qui vient en butée contre le bord inférieur du capuchon (30) lorsqu'il est fermé sur le contenant.

9. Ensemble de contenant selon la revendication 1 ou 5, dans lequel l'insert (70) est solidaire du contenant (10).

10. Ensemble de contenant selon la revendication 1 ou 5, comprenant en outre un absorbant ou un insert libérant un gaz, de préférence un absorbant sous forme de doublure desséchante (78).

11. Ensemble de contenant selon la revendication 1, dans lequel le contenant (10) est moulé par extrusion d'un polymère thermoplastique ou thermodurcissable.

12. Procédé de stockage de pilules, comprimés ou capsules comprenant leur placement dans le contenant (10) de l'ensemble de contenant de l'une quelconque des revendications 1 à 11 et la fermeture du capuchon (30).
